# EUROPÄISCHE PATENTSCHRIFT

(11) **EP 1 614 932 B1**
(45) Veröffentlichungstag und Bekanntmachung des Hinweises auf die Patenterteilung: **29.07.2009**
(21) Anmeldenummer: 05021355.2
(22) Anmeldetag: 28.10.1998
(51) Int. Cl.: F16F 15/16

(54) **Dichtung für Torsionsschwingungsdämpfer**
Sealing for torsional vibration damper
Etancheité pour amortisseur de vibrations torsionelles

(30) Priorität: 29.10.1997 DE 19747785; 05.11.1997 DE 19748730; 22.04.1998 DE 19817905
(43) Veröffentlichungstag der Anmeldung: 11.01.2006
(62) Teilanmeldung aus: 98120394.6
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, cand.-Ing., 52351 Düren (DE); Heidingsfeld, Dietmar, Dipl.-Ing., 52078 Aachen (DE)
(74) Vertreter: Reuther, Martin

(56) Entgegenhaltungen:
- DE-A- 4 332 465
- DE-C- 19 612 352
- DE-U- 7 926 142
- US-A- 4 856 636
- US-A- 5 042 632
- US-A- 5 382 193
- US-A- 5 667 053

## Beschreibung

Die Erfindung betrifft einen Torsionsschwingungsdämpfer mit zwei gegeneinander drehbeweglich angeordneten Baugruppen sowie einer Federkammer. In einer derartigen Federkammer ist in der Regel zumindest eine tangential zwischen den beiden Baugruppen wirksame Feder, zum Beispiel eine Spiralfeder, angeordnet.

Im folgendem wird unter den Begriffen "axial" eine Richtung parallel zur Hauptrotationsachse des Torsionsschwingungsdämpfers, "radial" eine von der Hauptrotationsachse wegweisende, in einer zur Hauptrotationsachse senkrecht stehenden Ebene liegende Richtung, und "tangential" eine zu den beiden vorgenannten Richtungen senkrechte Richtung verstanden.

Ein gattungsgemäßer Torsionsschwingungsdämpfer ist beispielsweise aus der US 5,667,053 bekannt, wobei hier die Federkammer mit einer an den beiden Baugruppen anliegenden Tellerfeder abgedichtet ist. Selbiges gilt in Bezug auf die DE 43 32 465 A1.

Demgegenüber offenbart die DE 196 12 352 einen Torsionsschwingungsdämpfer, wobei hier ein hochviskoses Medium als dichtendes Medium zur Anwendung kommt.

Es ist Aufgabe vorliegender Erfindung, einen gattungsgemäßen Torsionsschwingungsdämpfer bereit zu stellen, bei welchem die Federkammer gegen ein Austreten von Schmiermittel oder ähnlichem, wie zum Beispiel Fett, abgedichtet ist.

Als Lösung schlägt die Erfindung einen gattungsgemäßen Torsionsschwingungsdämpfer mit den kennzeichnenden Merkmalen des Anspruchs 1 vor.

Hierbei folgt die Erfindung dem Grundgedanken, daß in der Federkammer Fett ubiquitär umherfliegt und bei Auftreffen auf eine Wand eine Zentrifugalkraft erfährt, die es nach radial außen bewegt. Auf diese Weise erfährt auch Fett, welches auf die Leitflächen trifft, eine radiale Beschleunigung. Aufgrund der zur Federkammer hinweisenden, radialen Oberflächen der Leitflächen, ist gewährleistet, daß das auf einer Leitfläche befindliche Fett aufgrund der Zentrifugalkraft, entlang der Oberfläche radial nach außen transportiert wird.

Die zweite Leitfläche gewährleistet hierbei, daß durch den Spalt zwischen erster Leitfläche und zweiter Baugruppe ubiquitär umherfliegendes Fett nicht hindurchtreten kann, da es zuvor von dieser zweiten Leitfläche abgefangen wird. Dadurch daß die zweite Leitfläche federkammerseitig hinsichtlich des Spaltes und somit auch federkammerseitig hinsichtlich wenigstens eines Bereiches der ersten Leitfläche angeordnet ist, wird Fett, welches die zweite Leitfläche radial außen verlassen sollte zumindest durch die erste Leitfläche abgefangen. Die Zentrifugalkraft verhindert nämlich, daß dieses Fett wieder nach radialinnen, auf den Spalt zwischen erster Leitfläche und zweiter Baugruppe zu, beschleunigt wird.

Aufgrund des Spaltes zwischen erster Leitfläche und zweiter Baugruppe ist es mittels vorliegender Erfindung möglich, die Federkammer berührungslos abzudichten. Somit beeinflußt diese Anordnung die sonstigen Eigenschaften des Torsionsschwingungsdämpfers, insbesondere bei dessen Einsatz für Kupplungen, in vorteilhafter Weise nicht.

Die erste Leitfläche ist als ein Leitblech ausgestaltet , welches mit der ersten Baugruppe fest verbunden ist. Diese Ausgestaltung hat gegenüber einer einstückigen Ausbildung von erster Baugruppe und erster Leitfläche den Vorteil, daß diese einfacher hergestellt werden kann. Insbesondere können auf diese Weise schwer zu verwirklichende Hinterschneidungen vermieden werden. Als Verbindung zwischen Leitblech und erster Baugruppe kommen alle geeigneten Verbindungsarten, wie Löten, Schweißen, Nieten und ähnliches in Betracht.

Die Herstellung eines erfindungsgemäßen Torsionsschwingungsdämpfers vereinfacht sich insbesondere, wenn diese Verbindung zwischen erster Baugruppe und Leitblech als Clipsverbindung ausgestaltet ist. Zum Beispiel kann das Leitblech als Klammer gebogen sein, die durch die Eigenelastizität des Materials sich leicht öffnend einen Vorsprung der ersten Baugruppe umgreift.

Insbesondere kann das Leitblech ringscheibenförmig ausgestaltet sein. In der Regel weist ein gattungsgemäßer Torsionsschwingungsdämpfer, nämlich mehrere tangential angeordnete Feder bzw. Federkammern auf. Bei einer derartigen, ringförmigen Anordnung bedingt somit eine ringförmige Ausgestaltung des Leitblechs eine besonders einfache Montage, da in einem Arbeitsgang für sämtliche Federkammern ein entsprechendes Leitblech montiert werden kann. Auch ist bei dieser Ausgestaltung wegen der radialen Symmetrie einer Ringscheibe, die Ausbildung einer Klammer zum Verbinden des Leitblechs mit der ersten Baugruppe besonders einfach zu realisieren.

Desweiteren kann die zweite Leitfläche als Leitscheibe ausgestaltet sein. Eine derartige Leitscheibe kann in unkomplizierter Weise federkammerseitig über dem Spalt zwischen erster Leitfläche und zweiter Baugruppe angeordnet werden. Insbesondere ist es aus den vorgenannten Gründen vorteilhaft, die als zweite Leitfläche dienende Leitscheibe ringscheibenförmig auszugestalten.

Auch kann die Leitscheibe fest mit der ersten Leitfläche bzw. fest mit dem Leitblech verbunden sein, was jedoch nicht erfindungsgemäß ist. Diese feste Verbindung kann zum Beispiel durch eine Clips-Verbindung, eine Niet-Verbindung oder eine Torx-Nietverbindung bereit gestellt werden. Durch diese feste Verbindung wird die Stabilität der Anordnung aus Leitscheibe und erster Leitfläche bzw. Leitblech erhöht. Insbesondere ist es möglich die Leitscheibe aus einem leichten und gering reibenden Material, wie zum Beispiel Kunststoff herzustellen, da die erste Leitfläche bzw. das Leitblech der Stabilisierung der Leitscheibe dient. Diese Anordnung ermöglicht desweiteren eine Vormontage von Leitscheibe und Leitblech, wodurch sich die Herstellung eines erfindungsgemäßen Torsionsschwingungsdämpfers vereinfacht.

Zwischen erster Leitfläche und zweiter Leitfläche kann zumindest eine zur Federkammer hinweisende Öffnung vorgesehen sein. Durch diese Öffnung kann Schmiermittel bzw. Fett, welches auf irgendeine Weise, zum.Beispiel durch Kriechvorgänge, hinter die zweite Leitfläche gelangt ist, in die Federkammer zurückgeleitet werden. Insbesondere ist es vorteilhaft, wenn die Öffnung derart angeordnet ist, daß ein Partikel mit einer radialen Bewegungskomponente hindurchtreten kann. In diesem Fall werden Partikel hinter der zweiten Leitfläche in die Federkammer zurückgeleitet.

Zwischen erster und zweiter Leitfläche kann in der Nähe des Spaltes, welcher zwischen erster Leitfläche und zweiter Baugruppe angeordnet ist, ein beruhigter Raum vorgesehen sein. In diesem Raum kann sich hinter die zweite Leitfläche gelangtes Schmiermittel ansammeln und wird somit an einem Durchtreten des Spaltes gehindert. Ein derartiger beruhigter Raum ist insbesondere im Zusammenhang mit einer entsprechend an der radialen Außenseite des Raumes vorgesehenen Öffnung, durch welche das angesammelte Fett in die Federkammer zurückgeführt werden kann, vorteilhaft.

Zwischen erster und zweiter Leitfläche kann in einer nicht erfindungsgemäßen Ausführungsform auch ein Element, vorzugsweise ein Ring, aus saugfähigem Material vorgesehen sein, das zumindest bei Stillstand des Torsionsschwingungsdämpfers den Spalt zwischen erster Leitfläche und zweiter Baugruppe überdeckt. Ein derartiges saugfähiges Material kann jedes Material sein, das das in der Federkammer befindliche Schmiermittel oder ähnliches aufsaugen und wieder abgeben kann. Insbesondere kann dieses Material filzartig als Schwamm oder aus Schaumstoff gebildet sein. Das Material sollte eine höhere Kapillarkraft als der Spalt aufweisen. Dadurch, daß dieses saugfähige Material den Spalt zwischen erster Leitfläche und zweiter Baugruppe überdeckt, wird insbesondere ein Kriechen von Fett oder ähnliches durch diesen Spalt verhindert. Bei Rotationen des Torsionsschwingungsdämpfers sind aufgrund der Zentrifugalkräfte derartige Kriechvorgänge zu vernachlässigen. Folglich kann dieser Dichtring derart ausgestaltet sein, daß er bei Rotation aufgrund der Zentrifugalkraft von der zweiten Baugruppe oder aber von der ersten Leitfläche abhebt, so daß bei Rotationen des Torsionsschwingungsdämpfers eine berührungslose Dichtung vorliegt. Insbesondere kann dieser Dichtring in einem beruhigten Raum zwischen erster und zweiter Leitfläche vorgesehen sein.

Desweiteren ist es vorteilhaft, wenn radial außen Öffnungen zwischen erster Leitfläche und zweiter Leitfläche zur Federkammer hin vorgesehen sind, so daß in dem Dichtring angesammeltes Schmiermittel durch die Zentrifugalkraft bedingt in die Federkammer transportiert wird.

Es ist insbesondere möglich, eine Anordnung aus Dichtring, Leitblech und Leitscheibe vorzumontieren. Hierzu können zum Beispiel Leitblech und Leitscheibe wie vorstehend beschrieben fest verbunden werden, so daß der Dichtring zwischen Leitscheibe und Leitblech in geeigneter Weise fixiert ist.

Die letztere und die folgenden beiden Ausführungsform sind jedoch nicht erfindungsgemäß.

Der Dichtring kann unter radial nach innen gerichteter Vorspannung einer die zweite Leitfläche umfassenden Leitscheibe gehalten sein, die derart ausgestaltet ist, daß bei Rotation des Torsionsschwingungsdämpfers diese Vorspannung, vorzugsweise bis auf Null, reduziert wird. Hierzu kann die Leitscheibe zum Beispiel axiale Vorsprünge aufweisen, die den Dichtring umgreifen und in radialer Richtung nach Innen gegen die zweite Baugruppe drücken. Diese axialen Vorsprünge sind derart dimensioniert, daß sie bei einer Rotation des Torsionsschwingungsdämpfers durch die Zentrifugalkraft nach außen bewegt werden und so den Dichtring freigeben.

Die zweite Baugruppe des Torsionsschwingungsdämpfers kann eine dritte im wesentlichen radiale Leitfläche umfassen, welche einen axialen Spalt zwischen zweiter Leitfläche und zweiter Baugruppe auf einer der Federkammer abgewandten Seite überdeckt. Auf diese Weise können Schmiermittelpartikel, die einen gegebenenfalls vorhandenen, in axialer Richtung offenen Spalt zwischen zweiter Leitfläche und zweiter Baugruppe durchtreten von der dritten Leitfläche aufgefangen und auf dieser radial nach außen transportiert werden. Vorteilhafterweise ist der Spalt zwischen erster Leitfläche und zweiter Baugruppe in axialer Richtung von der Federkammer weiter entfernt als diese dritte Leitfläche. Erreicht ein auf der dritten Leitfläche transportiertes Partikel das radial außenliegende Ende der dritten Leitfläche und löst sich, durch die Zentrifugalkraft bedingt, von deren Ende in radialer Richtung, kann es die Federkammer nicht verlassen, da die eigentliche Öffnung der Federkammer, nämlich der Spalt zwischen erster Leitfläche und zweiter Baugruppe in axialer Richtung weiter von der Federkammer entfernt liegt.

Um den Rücktransport des Schmiermittels bzw. Fettes in die Federkammer in geeigneter Weise zu beeinflussen können in der Federkammer, insbesondere in der Nähe der ersten Leitfläclae, und/oder in einem beruhigten Raum zwischen erster und zweiter Leitfläche weitere Leitflächen derart angeordnet sein, daß auf die Leitflächen treffende Partikel bei Rotation des Torsionsschwingungsdämpfers in eine gewünschte Richtung, vorzugsweise in Richtung der Federkammer bzw. der Feder abgelenkt werden.

Der Torsionsschwingungsdämpfer kann desweiteren Mittel, die in Abhängigkeit von einem Verdrehwinkel zwischen erster Baugruppe und zweiter Baugruppe einen Spalt zwischen diesen Baugruppen verschließen, aufweisen. Diese Mittel können derart ausgestaltet sein, daß die Federkammer vollständig geschlossen wird, wenn ein bestimmter Verdrehwinkel zwischen den beiden Baugruppen erreicht wird und somit die Gefahr von umherspritzendem Fett am größten ist. Bei nur geringem bzw. nicht vorhandenem Verdrehwinkel hingegen kann der Spalt offen belassen werden, so daß - wenigstens an dieser Stelle - eine berührungslose Abdichtung der Federkammer und somit eine geringe Reibung gewährleistet ist.

Vorzugsweise umfassen die Verschließmittel wenigstens eine Nase, die bei einem bestimmten Verdrehwinkel in axialer Richtung bewegt wird. Diese Nase kann mit einem Schließblech verbunden werden, welches bei axialer Bewegung der Nase den Spalt zwischen erster Baugruppe und zweiter Baugruppe überbrückt. Es ist insbesondere möglich, auch ein bereits vorhandenes Leitblech als Schließblech zu nutzen.

Als bestimmungsgemäßer Antrieb für die Nase kann jede bauliche Einheit des Torsionsschwingungsdämpfers genutzt werden, die eine Verdrehung zwischen erster Baugruppe und zweiter Baugruppe indiziert. Insbesondere können dieses Vorsprünge an den ersten oder zweiten Baugruppe sein. Besonders geeignet sind allerdings Federkeile, zwischen welchen die Federn angeordnet sind.

Es versteht sich, daß die vorgenannten Verschließmittel auch unabhängig von den übrigen Merkmalen des erfindungsgemäßen Torsionsschwingungsdämpfers vorteilhaft zur Abdichtung einer Federkammer Verwendung finden können.

Darüber hinaus kann der Torsionsschwingungsdämpfer einen durch Fliehkräfte bewirkten Fetttransport aufweisen. Während des Betriebes wird das Fett in verschiedenste Richtungen in der. Federkammer verspritzt bzw. verteilt. In der Regel ist jedoch das Fett nur an bestimmten Bereichen in der Federkammer vonnöten. Durch das Vorsehen eines Fetttransportes kann das in der Federkammer verteilte Fett an die gewünschten Positionen zurückgeführt werden.

Vorteilhafterweise weist der Fetttransport einen radial innen angeordnete Fettaufnahme und eine radial weiter außen angeordnete Fettabgabe auf, wobei zwischen Fettabgabe und Fettaufnahme Mittel vorgesehen sind, die das Fett bei seinem Weg von der Fettabgabe zur Fettaufnahme in Umfangsrichtung verlagern. Während durch die Fliehkräfte eine radiale Bewegung des Fetts automatisch erfolgt, ermöglichen die Verlagerungsmittel einen gezielten Transport des Fetts auch in Umfangsrichtung.

Als Fettaufnahme kann jeder Oberfläche des Torsionsschwingungdämpfers dienen. Insbesondere kann das Fett darüber hinaus auch durch Spalte oder Öffnungen aufgenommen werden, z. B. durch einen hinter eine Leitfläche führenden Spalt.

Die Verlagerungsmittel können z. B. an einer Oberfläche mit radialer Komponente ausgebildete Strukturen, wie Ableitflächen, sein, durch welche ein Partikel, wie ein Fetteilchen, in Umfangsrichtung abgelenkt wird, wenn es durch Fliehkräfte radial nach außen bewegt wird.

Es versteht sich, daß der vorbeschriebene Fetttransport unabhängig von den übrigen Merkmalen vorteilhaft bei einem Torsionsschwingungsdämpfer Verwendung finden kann, bei welchem Fett nur an bestimmten Stellen vonnöten ist.

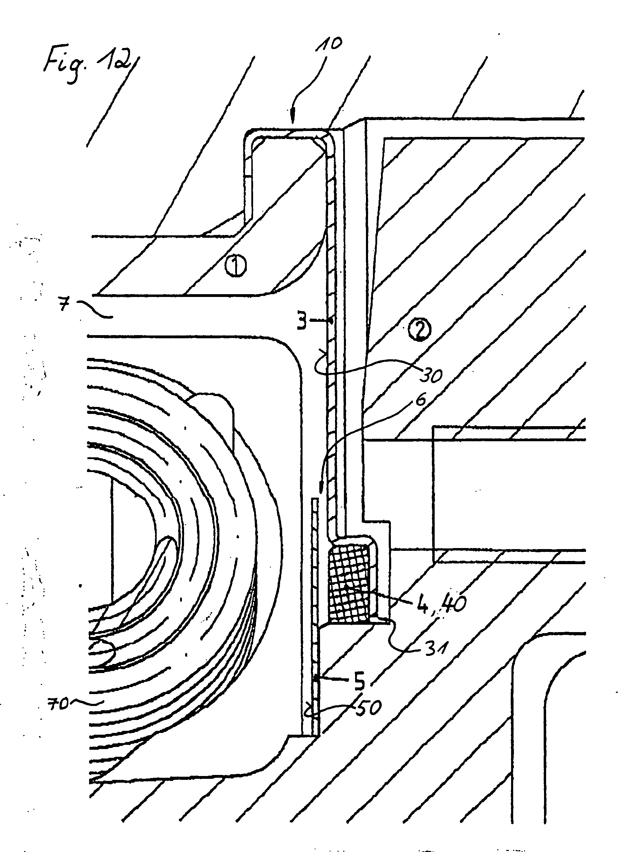

Weitere Vorteile, Eigenschaften und Ziele vorliegender Erfindung finden sich in der folgenden Beschreibung anliegender Zeichnung, in welcher zehn Ausführungsformen von Torsionsschwingungsdämpfer beispielhaft dargestellt sind, wobei jedoch nur Ausführungsformen nach Figuren 12-14 erfindungsgemäß sind. In der Zeichnung zeigen:
- Figur 1: eine erste Ausführungsform eines Torsionsschwingungsdämpfers im Schnitt;
- Figur 2: einen Ausschnitt aus Figur 1;
- Figur 3: eine zweite Ausführungsform eines Torsionsschwingungsdämpfers an einer Nase einer ersten Baugruppe geschnitten,;
- Figur 4: den Torsionsschwingungsdämpfer nach Figur 3 in ähnlicher Darstellung wie Figur 2;
- Figur 5: eine dritte Ausführungsform eines Torsionsschwingungsdämpfers in ähnlicher Darstellung wie Figur 2;
- Figur 6a: eine vierte Ausführungsform eines Torsionsschwingungsdämpfers in ähnlicher Darstellung wie Figur 3;
- Figur 6b: den Torsionsschwingungsdämpfer nach Figur 6 in ähnlicher Darstellung wie Figur 2;
- Figur 7a: eine Variante des vierten Torsionsschwingungsdämpfers in ähnlicher Darstellung wie in Figur 3;
- Figur 7b: die Variante nach Figur 7a in ähnlicher Darstellung wie Figur 2;
- Figur 8a: eine weitere Variante des vierten Torsionsschwingungsdämpfers im Schnitt;

- Figur 8b: die weitere Variante nach Figur 8a in ähnlicher Darstellung wie Figur 1;
- Figur 8c: die weitere Variante nach Figuren 8a und 8a in ähnlicher Darstellung wie Figur 2;
- Figur 9a: eine fünfte Ausführungsform eines Torsionsschwingungsdämpfers in ähnlicher Darstellung wie Figur 1;
- Figur 9b: den Torsionsschwingungsdämpfer nach Figur 8 in ähnlicher Darstellung wie Figur 2;
- Figur 10: eine sechste Ausführungsform eines Torsionsschwingungsdämpfers in ähnlicher Darstellung wie Figur 3;
- Figur 11: den Torsionsschwingungsdämpfer nach Figur 10 in ähnlicher Darstellung wie Figur 2;
- Figur 12: eine Ausführungsform eines erfindungsgemäßen Torsionsschwingungsdämpfers in ähnlicher Darstellung wie Figur 2;

- Figur 13: eine weitere Ausführungsform eines erfindungsgemäßen Torsionsschwingungsdämpfers in ähnlicher Darstellung wie Figur 2;
- Figur 14: den Torsionsschwingungsdämpfer nach Figur 13 in einer anderen Betriebsstellung;

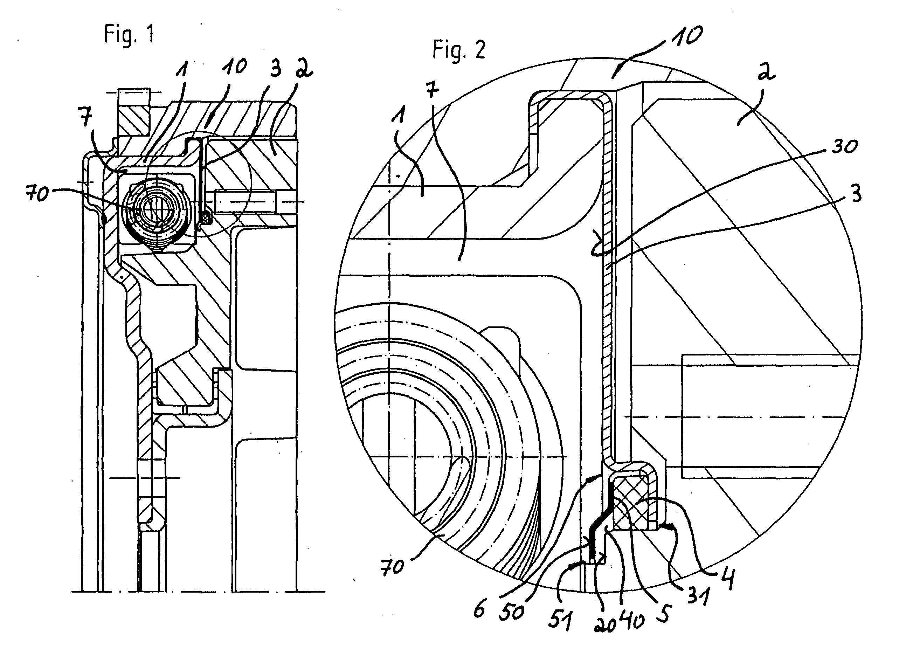

- Figur 1.5: eine weitere Ausführungsform eines nicht erfindungsgemäßen Torsionsschwingungsdämpfers in ähnlicher Darstellung wie Figur 2 und

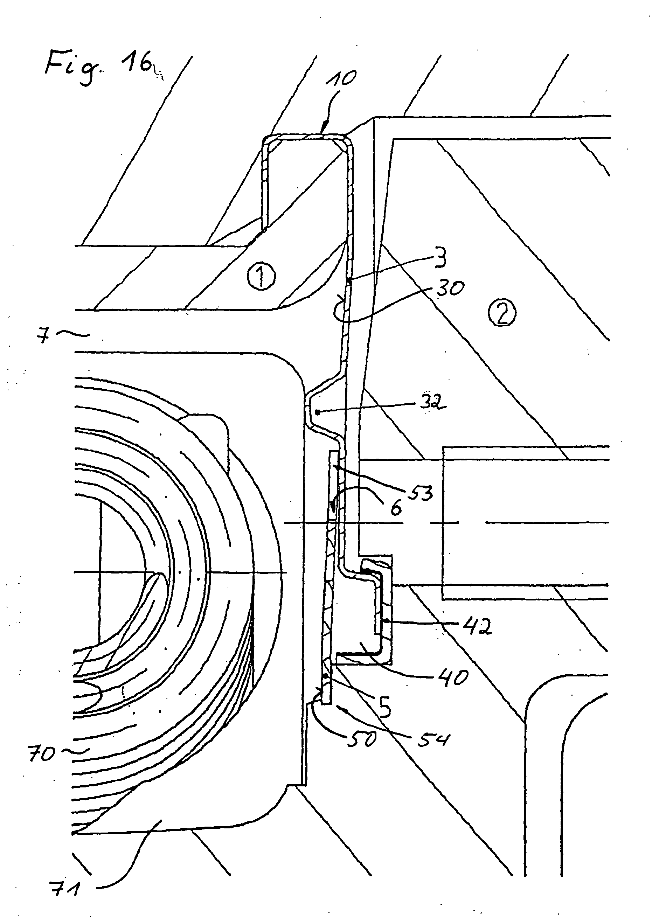

- Figur 16: eine weitere Ausführungsform eines nicht erfindungsgemäßen Schwingungsdämpfers in ähnlicher Darstellung wie Figur 2.

Hierbei handelt es sich bei den in den Figuren 1 bis 11 dargestellten Beispielen nicht um Ausführungsbeispiele der Erfindung sondern um Beispiele, welche das Prinzip einer berührungslosen Dichtung ebenfalls verwirklichen und das Verständnis der Erfindung erleichtern, bei denen jedoch die zweite Leitfläche nicht an der zweiten Baugruppe befestigt ist.

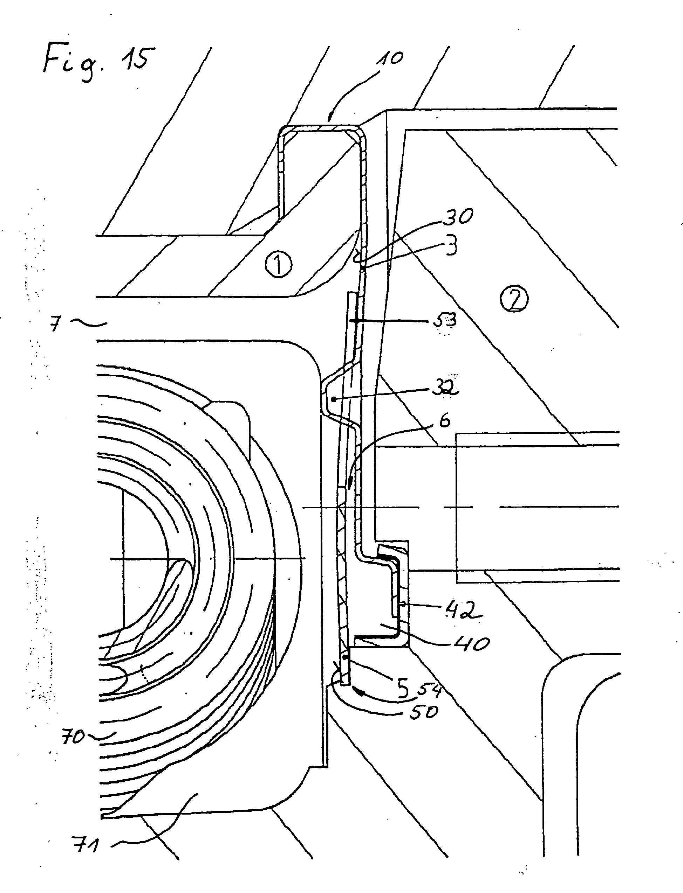

Die Figuren 15 und 16 zeigen nicht baüchrungslose und somit ebenfalls nicht erfindungsgemäße Ansführungsformen.

Der Torsionsschwingungsdämpfer der ersten Ausführungsform (Figuren 1 und 2) weist eine erste Baugruppe 1 und eine zweite Baugruppe 2 auf, die gegeneinander drehbeweglich angeordnet sind. Die beiden Baugruppen 1 und 2 schließen eine Federkammer 7 ein, in welcher eine Federanordnung 70 vorgesehen ist. Diese Federanordnung 70 ist zwischen den beiden Baugruppen 1 und 2 tangential wirksam, wobei die erste Baugruppe 1 Nasen 72 aufweist, die mit Federkeilen 71 der Federanordnung 70 wechselwirken.

An der ersten Baugruppe 1 ist ein scheibenringförmiges Leitblech 3 angeclipst (Clipsverbindung 10), welches eine erste Leitfläche 30 aufweist und von der zweiten Baugruppe 2 über einen Spalt 31 beabstandet ist.

Desweiteren weist dieser Torsionsschwingungsdämpfer eine ringscheibenförmige Leitscheibe 5 auf, die an dem Leitblech 3 befestigt ist. Diese Leitscheibe 5 ist über einen Spalt 51 von der zweiten Baugruppe 2 beabstandet und weist eine zweite Leitfläche 50 auf.

Hinter der Leitscheibe 5 bzw. der zweiten Leitfläche 50 befindet sich ein beruhigter Raum 40, welcher teilweise durch einen Dichtring 4 aufgefüllt ist. Der Dichtring 4 liegt an der zweiten Baugruppe 2 an und überdeckt auf diese Weise den axial ausgerichteten Spalt 31. zwischen erster Leitfläche 30 und zweiter Baugruppe 2. In vorliegendem Ausführungsbeispiel besteht der Dichtring 4 aus Filz.

An der radial außenliegenden Seite des beruhigten Raumes 40 sind zwischen erster Leitfläche 30 und zweiter Leitfläche 50 bzw. zwischen Leitblech 3 und Leitscheibe 5 Öffnungen 6 vorgesehen.

Auf der der Federkammer 7 abgewandten Seite des Spaltes 51 zwischen zweiter Baugruppe 2 und zweiter Leitfläche 50 ist eine dritte Leitfläche 20 angeordnet.

Jede der drei Leitflächen 30, 50 und 20 weist eine axiale Oberflächenkomponente auf, die zur Federkammer hinweist. Bei rotierendem Torsionsschwingungs-dämpfer werden somit auf den Leitflächen 30, 50 und 20 befindliche Partikel radial nach außen bewegt und verbleiben somit in der Federkammer 7. Durch den Spalt 51 eingetretene Partikel werden auf der dritten Leitfläche 20 in den beruhigten .. Raum 40 befördert und gelangen von dort, durch die Zentrifugalkraft bedingt, mit den in dem Dichtring befindlichen Partikeln auf die erste Leitfläche 30 und durch die Öffnung 6 zurück in die Federkammer 7. Ebenso werden Partikel auf der zweiten Leitfläche 50 radial nach außen gefördert und gelangen aufgrund der Zentrifugalkraft auf die erste Leitfläche 30.

Der Dichtring 4 ist derart gewählt, daß er bei einer gewünschten Drehzahl des Torsionsschwingungsdämpfers von der zweiten Baugruppe abhebt. Auf diese Weise ist bei diesen und höheren Drehzahlen eine berührungslose Abdichtung der Federkammer 7 gewährleistet.

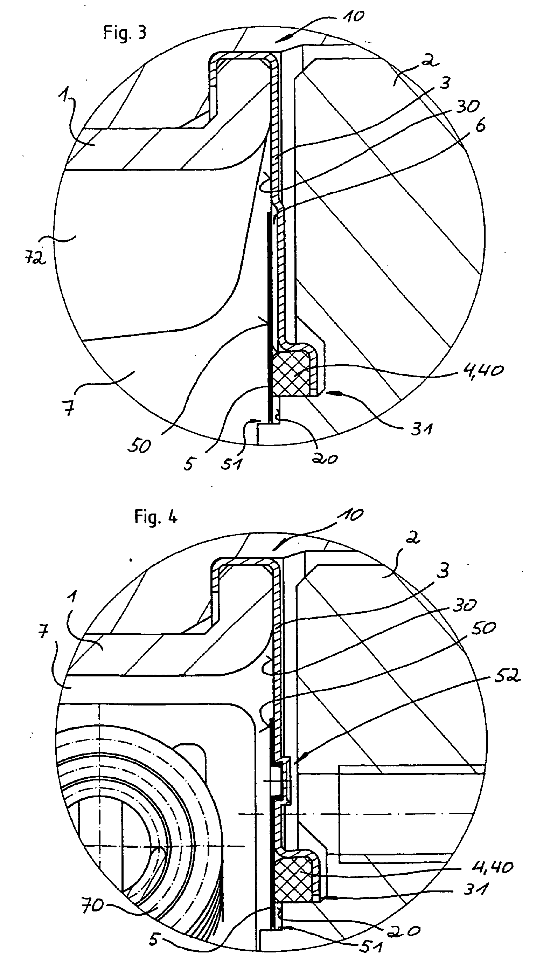

Der Torsionsschwingungsdämpfer nach der zweiten Ausführungsform (Figuren 3 und 4) entspricht im wesentlichen dem nach der ersten Ausführungsform. Die zweite Ausführungsform weist jedoch eine im wesentlichen planare Leitscheibe 5 auf, die mittels mehrerer Absenkungen (Verbindungen 52) formschlüssig mit dem Leitblech 3 verbunden ist.

Zwischen den Verbindungsstellen 52 sind radiale, längliche Ausnehmungen des Leitblechs 3 vorgesehen, die die Öffnungen 6 bilden.

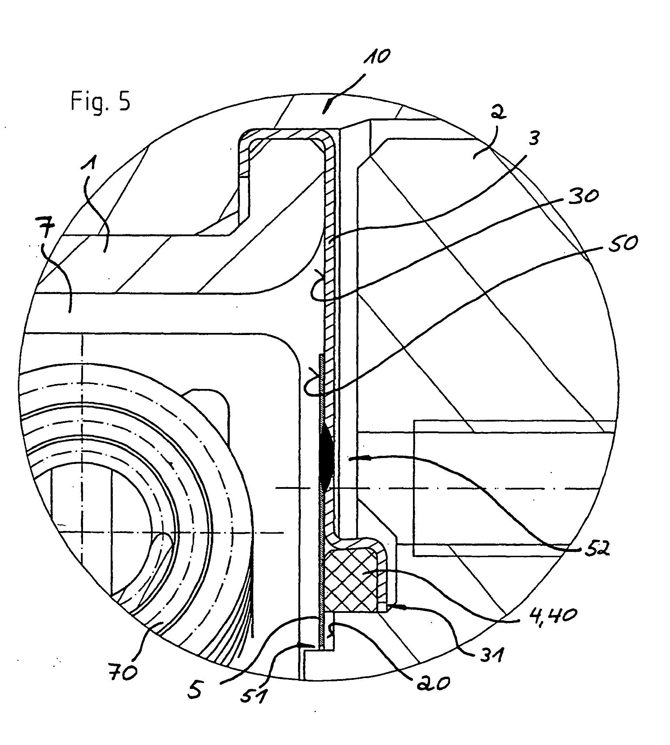

Nahezu baugleich ist die dritte Ausführungsform (Figur 5), die sich von der zweiten Ausführungsform lediglich dadurch unterscheidet, daß an der Verbindungstelle 52 ein Schweißpunkt vorgesehen ist. Alternativ, kann an der Verbindungsstelle 52 jeweils eine linsenförmige Ausnehmung in dem Leitblech 3 vorgesehen sein, in welche jeweils ein entsprechender Vorsprung der Leitscheibe 5 formschlüssig eingreift.

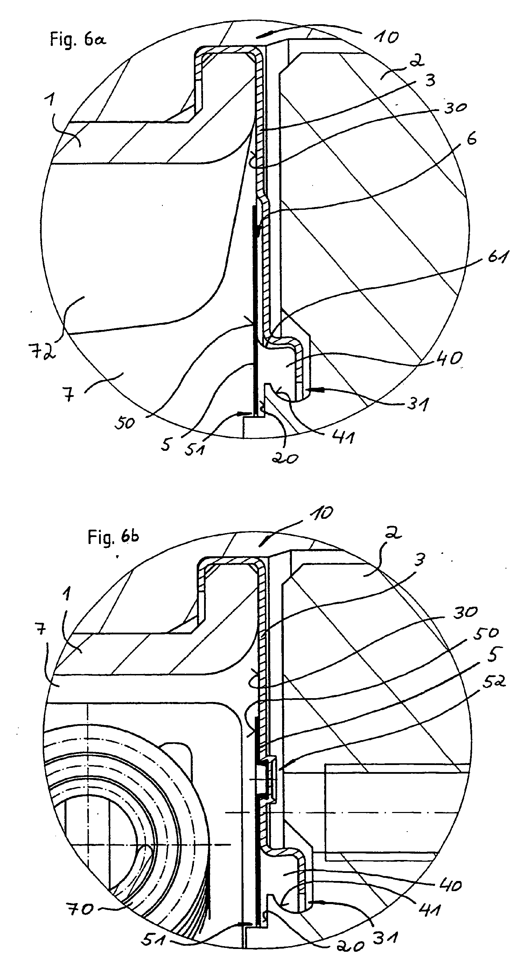

Auch die vierte Ausführungsform (Figuren 6a und 6b) entspricht im wesentlichen der zweiten Ausführungsform. Bei dieser ist jedoch auf einen Dichtring zur Gänze verzichtet worden. Statt dessen weist die zweite Baugruppe 2 eine konkave Leitfläche 41 auf, die von dem Spalt 31 zwischen zweiter Baugruppe 2 und erster Leitfläche 30 in den beruhigten Raum 40 reicht und sich in einem Fortsatz mit der dritten Leitfläche 20 trifft. Bei Rotation dieses Torsionsschwingungsdämpfers werden auf der dritten Leitfläche 20 oder der konkaven Leitfläche 41 befindliche Partikel zu dem Fortsatz transportiert, um bei entsprechender Überwindung der Adhäsionskräfte radial in den beruhigten Raum 40 auf die erste Leitfläche hin gefördert zu werden.

In Umfangsrichtung ist bei dieser Ausführungsform beidseits jeder Öffnung 6 jeweils eine schräge Ableitfläche 61 vorgesehen, durch welche ein Ansammeln von Fett in dem beruhigten Raum 40 an zur Rotationsachse parallelen Flächen vermieden bzw. reduziert wird. Diese Ableitflächen 61 weisen eine axial gerichtete Oberflächenkomponete auf und leiten auf diese Weise Fett in Umfangsrichtung ab.

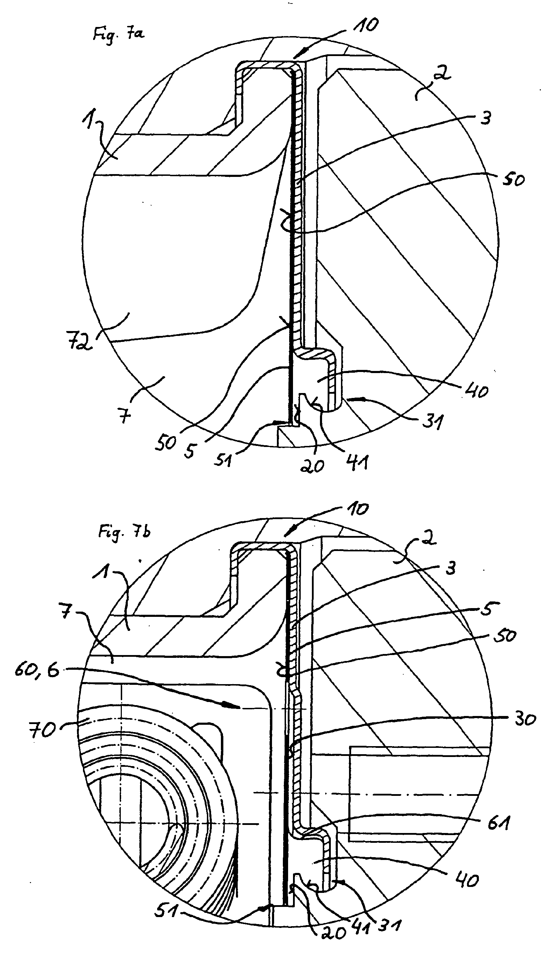

Eine erste Variante der vierten Ausführungsform ist in den Figuren 7a und 7b dargestellt. Während bei der vierten Ausführungsform die Öffnungen 6 auf Höhe der Nasen 72 der ersten Baugruppe 1 angweordnet sind, befinden sich bei dieser Variante die Öffnungen 6 auf Höhe der Federn 70. Auf diese Weise wird, je nach bestehenden Anforderungen, ein Transport des Fettes an die gewünschte Position gewährleistet.

Bei dieser ersten Variante ist die Leitscheibe 5 planar ausgestaltet und besitzt einen Außenradius, der annähernd dem Außenradius des Leitblechs 3 entspricht. Auf diese Weise kann die Leitscheibe 5 gemeinsam mit dem Leitblech 3 an der ersten Baugruppe 1 durch die Clips-Verbindung 10 befestigt werden und es wird eine besonders einfache Montage dieser Ausführungsform gewährleistet. In der Leitscheibe 5 sind auf Höhe der radial außenliegenden Seite des beruhigten Raumes 40 Löcher 60 vorgesehen, die die Öffnungen 6 bilden und durch welche die Fettabfuhr erfolgt.

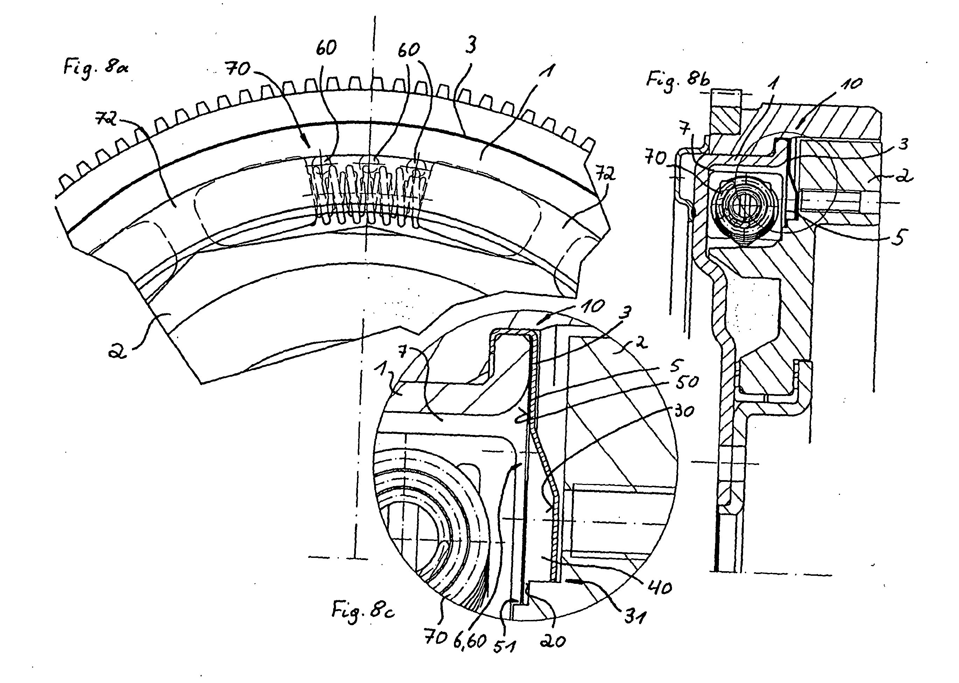

Eine in Figuren 8a bis 8c dargestellte zweite Variante weist gegenüber der ersten Variante einen vergrößerten, ringförmigen beruhigten Raum 40 auf.

Desweiteren sind in der Leitscheibe 5 auf Höhe der Federanordnung 70 drei Löcher 60 vorgesehen, statt des einen Lochs 60 bei der ersten Variante. Bei dieser zweiten Variante ist auf Ableitflächen verzichtet worden und der Fetttransport erfolgt schlicht durch geeignete Anordnung der Löcher 60. Die Verlagerungsmittel für eine Fettverlagerung umfassen bei dieser Variante die Löcher 60 und die erste Leitfläche 30, an welche sich das Fett ansammelt bis es durch die Löcher 60 abgeführt wird.

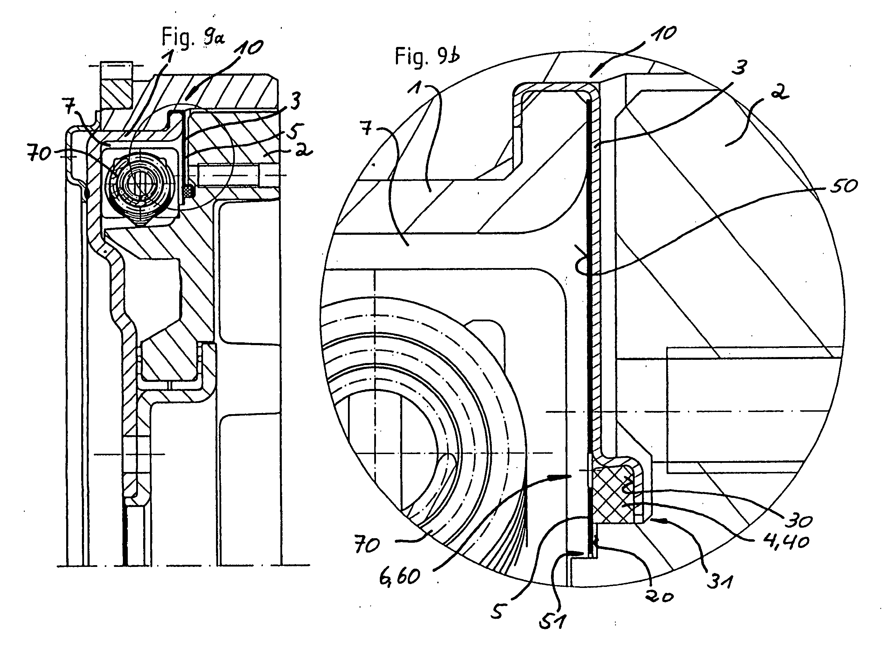

Auch die fünfte Ausführungsform (Figuren 9a und 9b) eines erfindungsgemäßen Torsionsschwingungsdämpfers entspricht im wesentlichen den vorgenannten Ausführungsformen. Bei dieser fünften Ausführungsform, ist jedoch ein Dichtring 4 vorgesehen.

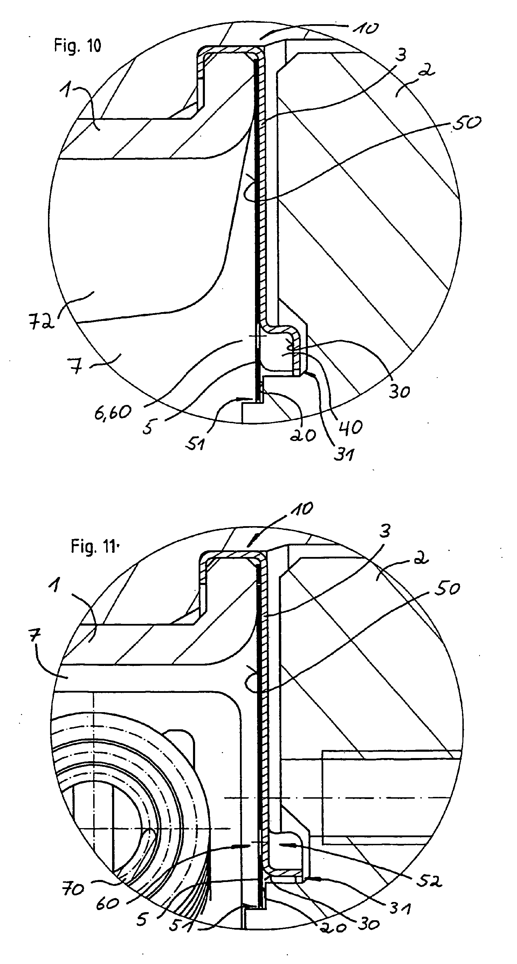

Gegenüber der fünften Ausführungsform ist bei der sechsten Ausführungsform (Figuren 10 und 11) auf einen Dichtring verzichtet. Desweiteren ist bei der sechsten Ausführungsform der beruhigte Raum 40 nicht durchgehend ringförmig ausgestaltet, sondern in Kammern unterteilt. Zwischen diesen Kammern befinden sich Stege, an welchen das Leitblech 3 und die Leitscheibe 5 zusätzlich verbunden sind. Für diese Verbindungen werden Löcher 60 genutzt, die auf Höhe des beruhigten Raumes 40 als Öffnungen 6 zwischen Leitblech 3 und zweiter Leitfläche 50 dienen. Bei dieser Ausführungsform ist somit eine hohe Stabilität der Leitscheibe 5 gewährleistet, so daß insbesondere bei dieser Ausführungsform auch ein weniger stabiles Material als Leitscheibe 5 Verwendung finden kann.

Bei der erfindungsgemäßen Ausführungsform (Figur 12) ist die Leitscheibe 5 nicht mit dem Leitblech 3 verbunden, sondern auf die zweite Baugruppe 2 aufgesetzt. Insofern dreht die Leitscheibe 5 bei dieser Ausführungsform gemeinsam mit der zweiten Baugruppe 2. Bei dieser Ausführungsform wird die Öffnung 6 durch einen axialen Spalt zwischen Leitblech 3 und Leitscheibe 5 gebildet.

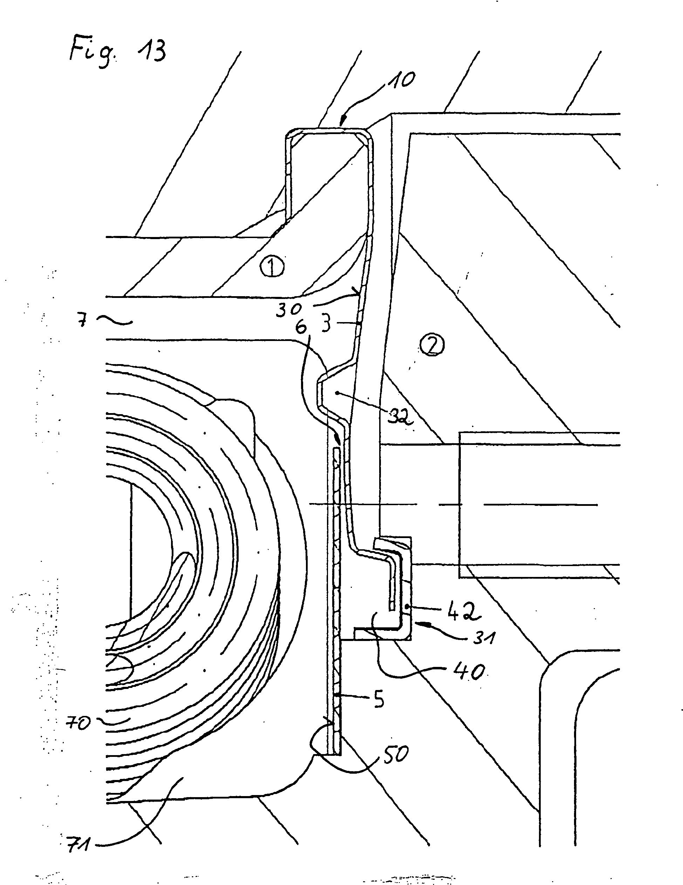

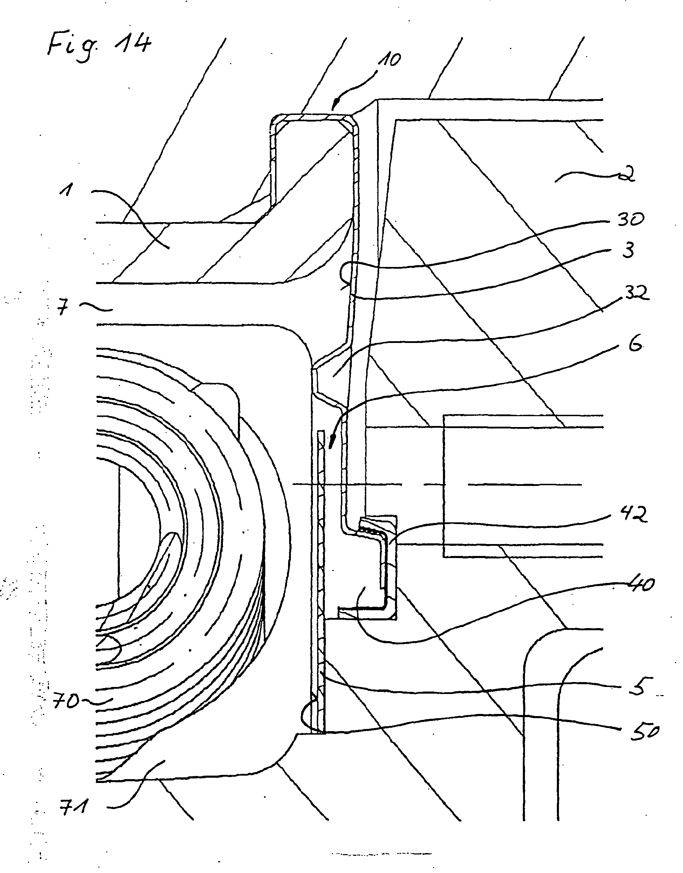

Auch bei der Ausführungsform in Figuren 13 und 14 ist die Leitscheibe 5 auf die zweite Baugruppe 2 aufgesteckt und von dem Leitblech 3 über die Öffnung 6 beabstandet. Bei dieser Ausführungsform weist das Leitblech 3 Nasen 32 auf, die derart mit jeweils an den Enden der Federn 70 vorgesehenen Federkeilen 71 wechselwirken, daß die Nasen 32 von einem Federkeil 71 auf die zweite Baugruppe 2 zubewegt werden, wenn die Feder 70 komprimiert ist, also sich die zweite Baugruppe 2 relativ zur ersten Baugruppe 1 bewegt. Durch diese Bewegung wird das Leitblech 3 gegen einen Dichtkörper 42 gepreßt, der an der zweiten Baugruppe 2 vorgesehen ist. Auf diese Weise wird die Federkammer 7 vollständig geschlossen, wenn die Feder 70 komprimiert wird und somit die Gefahr von umherspritzendem Fett am größten ist. Bei nicht oder nur gering komprimierter Feder hingegen liegt eine berührungslose Abdichtung der Federkammer 7 vor.

## Patentansprüche

1. Torsionsschwingungsdämpfer mit zwei gegeneinander drehbeweglich angeordneten Baugruppen (1, 2) sowie mit einer Federkammer (7), in welcher eine Federanordnung (70) vorgesehen ist, wobei die erste Baugruppe (1) eine erste, als ein Leitblech (3) ausgestaltete Leitfläche (30) aufweist und die Federkammer (7) radial außen abdichtet und wobei das Leitblech (3) mit der ersten Baugruppe (1) fest verbunden, von der zweiten Baugruppe (2) durch einen Spalt (31) beabstandet und im wesentlichen radial angeordnet ist, **dadurch gekennzeichnet, dass** an der zweiten Baugruppe (2), die ein Kupplungsflansch ist, eine im wesentlichen radial angeordnete zweite Leitfläche (50) befestigt ist, die den Spalt (31) berührungslos überdeckt, wobei die Leitflächen (30, 50) zur Federkammer hinweisende, radiale Oberflächen aufweisen.

2. Torsionsschwingungsdämpfer nach Anspruch 1, **dadurch gekennzeichnet, dass** das Leitblech (3) ringscheibenförmig ausgestaltet ist.

3. Torsionsschwingungsdämpfer nach Anspruch 1 oder 2, **dadurch gekennzeichnet, dass** die zweite Leitfläche als Leitscheibe (5) ausgestaltet ist, die ringscheibenförmig ausgestaltet ist.

4. Torsionsschwingungsdämpfer nach einem der Ansprüche 1 bis 3, **dadurch gekennzeichnet, dass** zwischen erster Leitfläche (30) und zweiter Leitfläche (50) zumindest eine zur Federkammer (7) hinweisende Öffnung (6) vorgesehen ist.

5. Torsionsschwingungsdämpfer nach Anspruch 4, **dadurch gekennzeichnet, dass** die Öffnung (6) derart angeordnet ist, dass ein Partikel mit einer radialen Bewegungskomponente hindurch treten kann.

## Claims

1. A torsional vibration damper with two assemblies (1, 2) arranged rotationally moveable relative to each other and with a spring chamber (7) in which a spring arrangement (7) is provided, wherein the first assembly (1) comprises a first guide surface (30) designed as guide plate (30) and seals the spring chamber (7) radially on the outside and wherein the guide plate (3) is permanently joined with the first assembly (1) and spaced from the second assembly (2) through a gap (31) and substantially arranged radially, **characterized in that** on the second assembly (2) which is a coupling flange a second guide surface (50) which is arranged substantially radially is attached, which covers the gap (31) without contact, wherein the guide surfaces (30, 50) have radial surfaces facing towards the spring chamber.

2. The torsional vibration damper according to Claim 1, **characterized in that** the guide plate (3) is designed in the shape of a ring disc.

3. The torsional vibration damper according to Claim 1 or two, **characterized in that** the second guide plate is designed as guide disc (5) which is designed in the shape of a ring disc.

4. The torsional vibration damper according to any one of the Claims 1 to 3, **characterized in that** between first guide surface (30) and second guide surface (50) at least one opening (6) facing towards the spring chamber (7) is provided.

5. The torsional vibration damper according to Claim 4, **characterized in that** the opening (6) is arranged in such a manner that a particle with a radial movement component can pass through it.

## Revendications

1. Amortisseur de vibration de torsion comprenant deux ensembles (1, 2) disposés de façon mobile en rotation l'un par rapport à l'autre et une chambre de ressort (7), dans laquelle est prévu un agencement de ressort (70), le premier ensemble (1) présentant une première surface conductrice (30) conçue comme une chicane (3) et assurant l'étanchéité de la chambre de ressort (7) radialement vers l'extérieur et la chicane (3) étant reliée de façon fixe au premier ensemble (1), étant espacé du second ensemble (2) par une fente (31) et étant disposé sensiblement radialement, **caractérisé en ce que** sur le second ensemble (2), qui est une bride d'accouplement, est fixée une seconde surface conductrice (50) disposée sensiblement radialement, qui recouvre la fente (31) sans contact, les surfaces conductrices (30, 50) présentant des surfaces radiales dirigées vers la chambre de ressort.

2. Amortisseur de vibration de torsion selon la revendication 1, **caractérisé en ce que** la chicane (3) est conçue en forme de disque annulaire.

3. Amortisseur de vibration de torsion selon la revendication 1 ou 2, **caractérisé en ce que** la seconde surface conductrice est conçue comme un disque conducteur (5) qui est conçu en forme de disque annulaire.

4. Amortisseur de vibration de torsion selon l'une quelconque des revendications 1 à 3, **caractérisé en ce qu'**au moins une ouverture (6) dirigée vers la chambre de ressort (7) est prévue entre la première surface conductrice (30) et la seconde surface conductrice (50).

5. Amortisseur de vibration de torsion selon la revendication 4, **caractérisé en ce que** l'ouverture (6) est disposée de telle sorte qu'une particule avec une composante de déplacement radial peut passer à travers.
